Europäisches Patentamt

European Patent Office

Office européen des brevets

(19)

(11) Publication number: **0 047 096**

A2

# (12) EUROPEAN PATENT APPLICATION

(21) Application number: **81303746.2**

(22) Date of filing: **18.08.81**

(51) Int. Cl.³: **B 23 B 31/10**

(30) Priority: **02.09.80 GB 8028277**

(43) Date of publication of application:
**10.03.82 Bulletin 82/10**

(84) Designated Contracting States:
**DE FR GB IT**

(71) Applicant: **Pratt Burnerd International Limited**
**Park Works, Lister Lane**
**Halifax West Yorkshire HXI 5JH(GB)**

(72) Inventor: **Pickles, Kenneth Bailey Philip**
**15 Pye Nest Road**
**Halifax West Yorkshire(GB)**

(74) Representative: **Neill, Alastair William et al,**
**Appleyard Lees & Co. 15 Clare Road**
**Halifax West Yorkshire HX1 2HY(GB)**

(54) Chucks.

(57) A chuck comprises a body (10) rotatable about an axis (11) and at least one jaw (12) movable in a radial direction to clamp a workpiece in the jaw. The or each jaw (12) is removable by first moving the jaw (12) in the radial direction by a distance less than that required to move it completely clear of the body (10) and then withdrawing the jaw (12) from the body (10) in the axial direction. This enables jaws to be changed in a simple and rapid manner.

FIG.1.

Croydon Printing Company Ltd.

- 1 -

Chucks.

The invention relates to chucks, for example for use on machine tools.

Chucks are known, for example on numerical controlled turning machines, in which the jaws of the chucks can be removed and replaced by different jaws, for example to carry out a different operation or cope with a differently shaped or dimensioned workpiece.

Numerical controlled machines are relatively costly, and their increasing use has brought about an increased need to reduce non-productive time to a minimum. A significant factor in lost production time is the time taken to change the jaws of conventional chucks. The jaws are mounted for radial movement in slideways and in order to remove the jaws it is usually necessary to slide them in a radial direction right out of the chuck body. This requires a considerable degree of movement with respect to the chuck body, taking up time in itself, and furthermore the jaws must first be disconnected from their operating mechanisms, taking up even more time.

According to the invention, a chuck comprises a body rotatable about an axis, and at least one jaw movable in a radial direction to clamp a workpiece in the chuck, the jaw being removable from the body by first moving the jaw in the radial direction by a distance which is less than that required to move the jaw completely clear of the body, and then withdrawing the jaw from the body in the axial direction.

Preferably the jaw is mounted in a radially extending groove, the cross-section of which narrows towards the mouth of the groove, the jaw having an enlarged portion which engages behind the narrower mouth of the groove to retain the jaw in the groove, but the narrower mouth of the groove having a wider portion at at least one location along its length so that when the jaw is moved radially by a sufficient amount, the jaw can be withdrawn axially, the enlarged portion of the jaw passing out of the groove axially through the wider portion of the mouth.

Preferably the groove has at least two wider portions spaced apart from one another and the jaw has at least two enlarged portions also spaced apart from one another.

The groove may comprise a generally rectangular cross-section channel, flanges at the mouth of the channel giving the groove the general cross-section of a T, and the or each wider portion of the mouth being provided by interrupting the flanges.

The or each enlarged portion of the jaw may comprise a T-shaped portion.

The jaw is preferably operated during use of the chuck by a member which projects from the body of the chuck into a socket in the rear of the jaw, so that when the jaw is moved from the body in the axial direction, the operating member merely slides out of the socket.

Preferably the socket is enlarged in the radial direction opposite to the one in which the jaw moves to carry out its gripping function, to accommodate the relatively small amount of radial movement required during removal of the jaws.

A quick release device may be provided to prevent the operating member from moving in the socket during normal use of the jaw.

For example a spring loaded detent pin on the operating lever may be arranged to engage in a recess in the jaw.

A passage may lead to the recess from an exterior face of the jaw so that when it is desired to remove the jaw it is merely necessary to push a rod down the passage to move the spring loaded detent pin out of the recess.

The chuck preferably has a plurality of similar jaws, for example three.

The invention includes a machine tool fitted with a chuck according to the invention.

By way of example, specific embodiments of the invention will now be described, with reference to the accompanying drawings, in which:-

Figure 1 is a front view of part of one embodiment of chuck according to the invention;

Figure 2 is a view corresponding to Figure 1 but showing the chuck body only;

Figure 3 is a cross-section on line III-III of Figure 2;

Figure 4 is a side view of one of the jaws of the chuck;

Figure 5 is a plan view of the jaw shown in Figure 4;

Figure 6 is a sectional side view showing how the jaw engages in the body of the chuck;

Figure 7 is a sectional side view showing how the operating member of the jaw engages in the jaw; .

Figure 8 shows a detent key for use with the chuck; and

Figure 9 is a view similar to Figure 7 but showing an alternative embodiment of chuck.

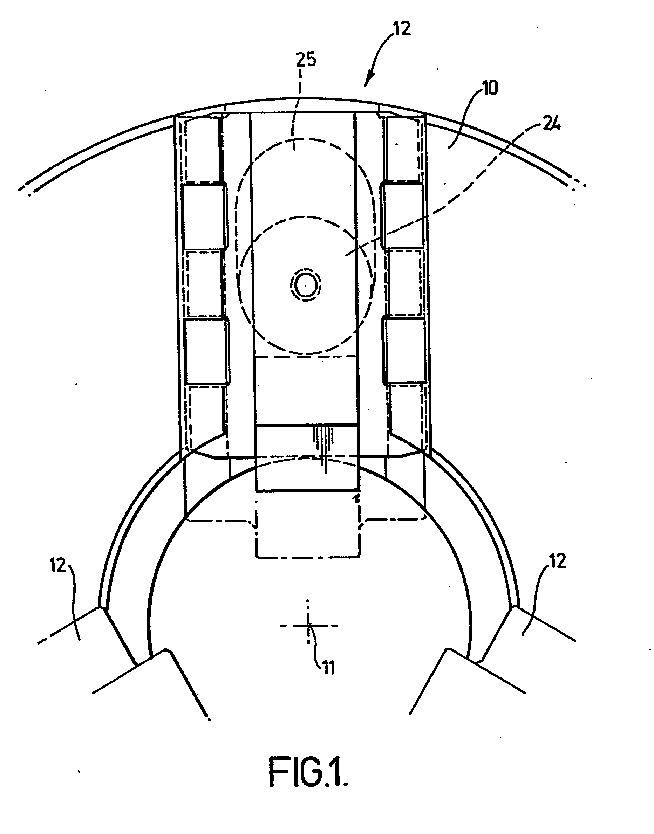

The chuck shown in Figure 1 comprises a generally cylindrical body 10 which can be mounted on a machine tool for rotation about an axis 11. The chuck has three jaws 12 which can be moved radially inwardly to grip a workpiece between the jaws. The jaws are identical and only one will be described in detail.

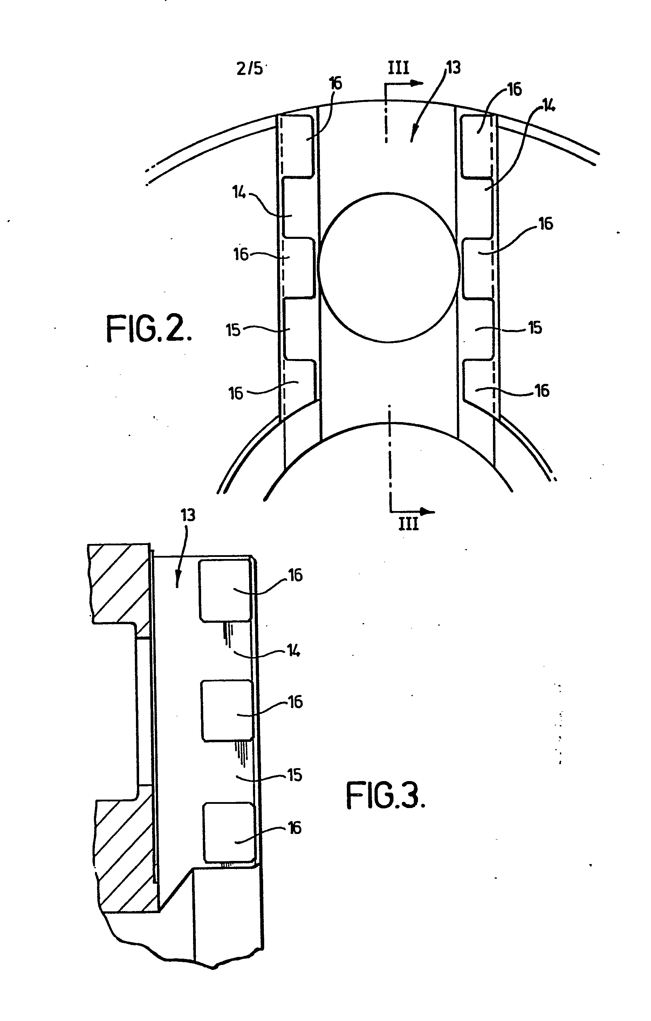

Each jaw slides in a generally T-shaped cross-section slot 13, as shown in Figures 2 and 3.

The groove can best be thought of as a generally rectangular cross-section groove with a pair of flanges at the mouth of the groove which give the cross-section a T-shape. However each flange is interrupted at 14 and 15, to leave three tongues 16.

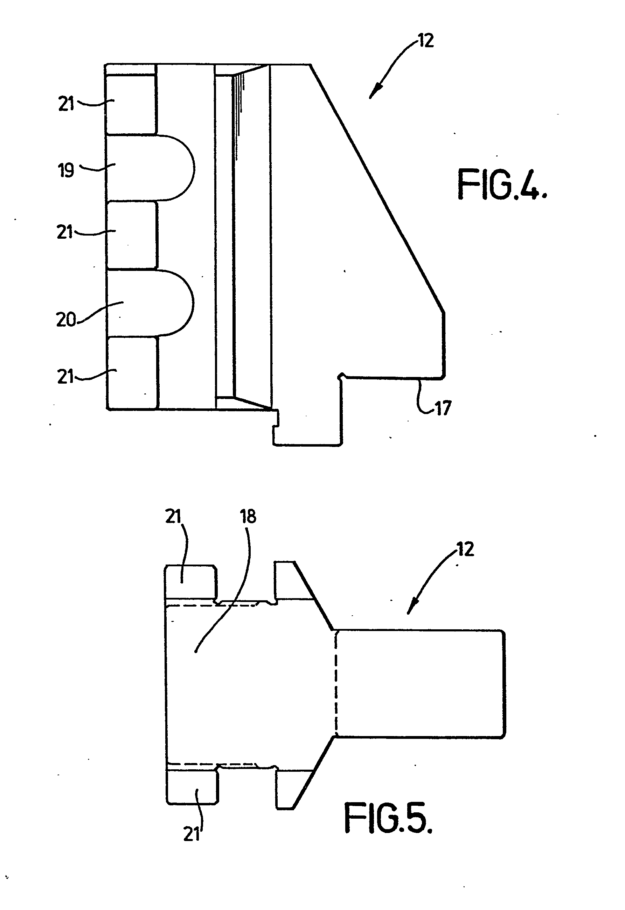

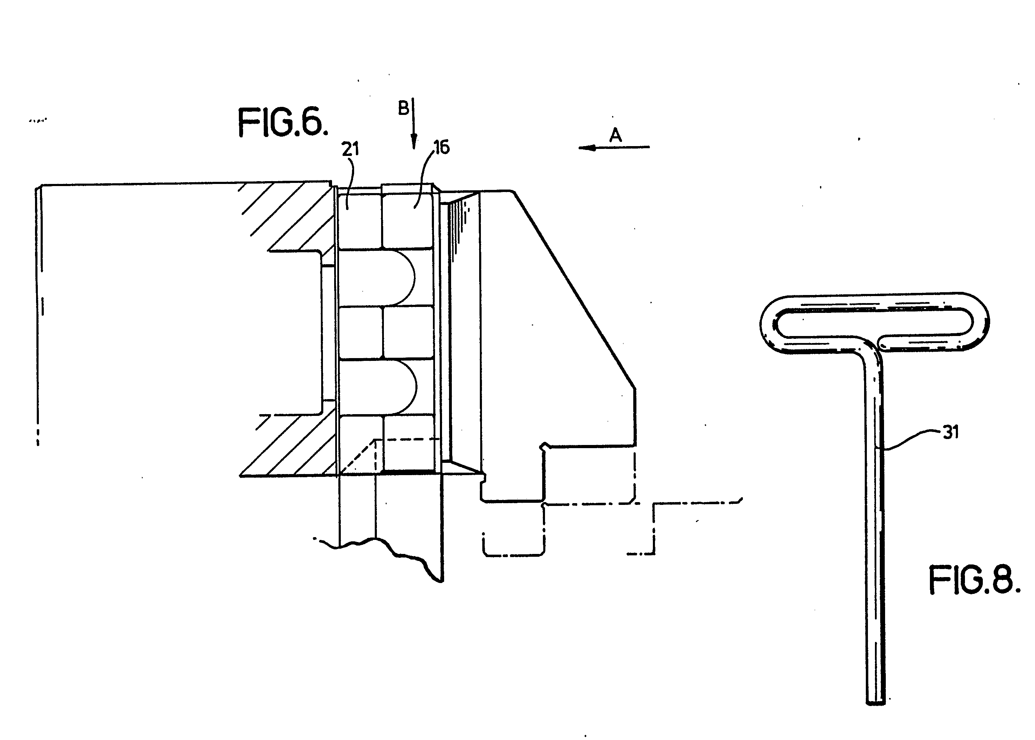

One of the jaws 12 is shown in detail in Figures 4 and 5. The jaw has a gripping face 17 and the rear portion 18 of the jaw is generally T-shaped in plan view, as shown in Figure 5. However the flanges which define the T are milled away at 19 and 20, as shown in Figure 4, thus leaving three tongues 21. The dimensions of the tongues 21 match the dimensions of the cut-away portions 14 and 15 of the body, and the dimensions of the tongues 16 on the body match the dimensions of the milled away portions 19 and 20.

When the chuck is in use, each jaw is securely located in the associated groove for sliding movement in a radial direction. The tongues 21 of the jaws are positioned behind the tongues 16 of the body, and since the jaws have a relatively small working stroke, the tongues of the body are always in at least partial registration with the tongues of the jaw during normal use of the chuck. The chuck thus behaves as though each jaw had a continuous T-shaped cross-section portion engaging in a continuous T-shaped cross-section slot in the body.

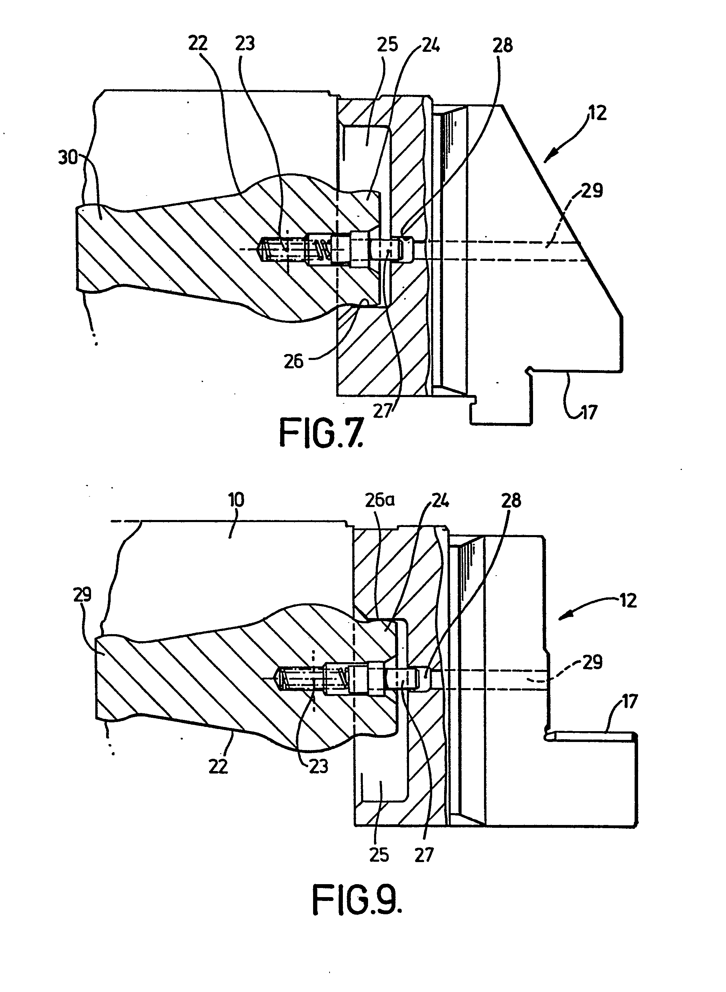

As best shown in Figure 7, the gripping movement of each jaw is brought about by an associated lever 22, which pivots about an axis 23 in the body. One end 24 of the lever engages in a socket 25 in the jaw. The radially inner face 26 of the lever abuts against one end face of the socket 25, these being the faces which bear the forces brought about when the chuck is used to grip a workpiece.
However as will be seen from Figures 1 and 7, the socket
25 is extended outwardly in the radial direction which is
opposite to the gripping direction, so that there is a
space between the radially outer face of the lever and the
other end of the socket 25.

Mounted within the end 24 of the lever 22 is a
spring loaded detent pin 27 which engages in a recess 28
in the jaw 12. A passage 29 leads from the recess 28 to
the front face of the jaw.

When a workpiece is positioned between the jaws,
it is gripped by using some form of conventional chuck
operating mechanism (not shown) to apply a radially outward
force to the end 30 of the lever 22. This causes the end
24 of each lever to apply force to the end 26 of each
socket 25, forcing the jaws radially inwardly. All the
pressure is applied by the lever ends 24 acting against the
ends of the sockets 25, and the spring loaded detent pins 27
bear no load.

The detent pins 27 only bear loads when the
workpiece is released. To release the workpiece the ends 30
of the levers are moved radially inwardly, and the detent
pins 27 act on the jaws to move the jaws radially outwardly.
However in these circumstances the jaws are not bearing any
load and the forces which the detent pins 27 have to transmit
are relatively small.

When it is desired to remove or change the jaws 12,
this can be achieved very rapidly. A detent key 31,
(Figure 8) which is merely a simple rod with a handle, is
pushed down each passage 29 in turn, to push the associated
detent pin 27 out of the recess 28. As soon as the detent
pin has been pushed out of the recess 28, the jaw can be
moved radially inwardly by a distance which is sufficient
to move the tongues 21 of the jaw completely out of
registration with the tongues 16 of the body, and into
registration with the cut-away portions 14 and 15 of the body.

Once each jaw is in this position the jaw can be pulled completely clear of ths body in the axial direction, the ends 24 of the levers merely withdrawing smoothly from the sockets 25.

Replacing the jaws or inserting a fresh set of jaws is an even quicker operation, since the detent key 31 is not required. The tongues 21 on the jaws are merely arranged in registration with the cut-away portions on the body, and the jaw is pushed into position in the axial direction. The base of the socket 25 engages the associated spring loaded detent pin 27, depressing the pin. The jaw is then moved radially into the desired position, the tongues on the jaw re-engaging behind the tongues on the body. When the jaw is in the correct position, the detent pin 27 snaps home into the associated recess 28.

Figures 9 shows an embodiment of the chuck which is required to grip a workpiece internally. The body 10 of the chuck is identical, but the jaws 12 are provided with gripping surfaces 17 positioned to grip the inside of a workpiece.

The slot 25 of this jaw is positioned more radially inwardly on the jaw than on the jaw shown in the earlier Figures, so that the radially outer face 26a of the end 24 of the lever 22 abuts against the radially outer end of the slot 25, since it is here that the major forces will be exerted when the chuck is used in this mode.

The method of inserting and removing jaws such as those shown in Figure 9 is identical to that used with the earlier jaws, except that after release of the detent pin 27, the jaw is moved radially outwardly, rather than radially inwardly.

The invention is not restricted to the details of the foregoing embodiments. For instance the spring loaded detent pin shown in the drawings is not an essential feature of the invention, its function merely being to bear the very small loads created when the jaws move in the release direction. Other forms of connection may be used. For instance there may be a detent pin arranged in some other position, and the method of releasing the pin may vary.

Whilst the jaws shown in the drawings are one-piece jaws, the invention is equally applicable to two-piece jaws, for example known forms of two-piece jaws where the two pieces are interconnected by American cross tenons or by standard serrations.

The invention is also applicable to other forms of chuck to that shown.

- 8 -

## Claims

1. A chuck comprising a body (10) rotatable about an axis (11) and at least one jaw (12) movable in a radial direction to clamp a workpiece in the chuck, the jaw (12) being removable from the body (10), characterised in that the jaw is removable by first moving the jaw (12) in the radial direction by a distance which is less than that required to move the jaw (12) completely clear of the body (10), and then withdrawing the jaw (12) from the body (10) in the axial direction.

2. A chuck as claimed in Claim 1, in which the jaw (12) is mounted in a radially extending groove (13), the cross-section of which narrows towards the mouth of the groove (13), the jaw (12) having an enlarged portion (21) which engages behind the narrower mouth of the groove (13) to retain the jaw (12) in the groove (13), but the narrower mouth of the groove (13) has a wider portion (14) at at least one location along its length so that when the jaw (12) is moved radially by a sufficient amount, the jaw (12) can be withdrawn axially, the enlarged portion (21) of the jaw (12) passing out of the groove (13) axially through the wider portion (14) of the mouth.

3. A chuck as claimed in Claim 2, in which the groove (13) has at least two wider portions (14, 15) spaced apart from one another and the jaw (12) has at least two enlarged portions (21) also spaced apart from one another.

4. A chuck as claimed in Claim 2 or Claim 3, in which the groove (13) comprises a generally rectangular channel, flanges (16) at the mouth of the channel giving the groove the general cross-section of a T, and the or each wider portion of the mouth being provided by interrupting the flanges (16).

5. A chuck as claimed in Claim 4, in which the or each enlarged portion (21) of the jaw (12) comprises a T-shaped portion.

6. A chuck as claimed in any one of the preceding claims, in which the jaw (12) is operated during use of the chuck by a member (22) which projects from the body (10) of the chuck into a socket (25) in the rear of the jaw (12) so that when the jaw (12) is removed from the body (10) in the axial direction, the operating member (22) merely slides out of the socket (25).

7. A chuck as claimed in Claim 6, in which the socket (25) is enlarged in the radial direction opposite to the one in which the jaw (12) moves to carry out its gripping functions, to accomodate the relatively small amount of radial movement required during removal of the jaw (12).

8. A chuck as claimed in Claim 7, in which a quick release device (27) is provided to prevent the operating member (22) from moving in the socket (25) during manual use of the jaw.

9.  A chuck as claimed in Claim 8, in which the quick release device comprises a spring loaded detent pin (27) arranged to engage in a recess (28) in the jaw (12).

10. A chuck as claimed in Claim 9, in which a passage (29) leads to the recess (28) from an exterior face of the jaw (12) so that when it is desired to remove the jaw (12) it is merely necessary to push a rod (31) down the passage (29) to move the spring loaded detent pin (27) out of the recess (28).

11. A chuck as claimed in any one of the preceding claims having a plurality of similar jaws.

12. A machine tool fitted with a chuck according to any one of the preceding claims.

FIG.1.

FIG.2.

FIG.3.

FIG.4.

FIG.5.

FIG.6.

B

21  16

A

4/5

31

FIG.8.

0047096

FIG.7.

FIG.9.